# EUROPEAN PATENT APPLICATION

(11) **EP 4 693 102 A2**
(43) Date of publication of application: **11.02.2026**
(21) Application number: 25215624.5
(22) Date of filing: 13.11.2025
(51) Int. Cl.: G06N 3/045, G06N 3/0495, G06N 3/063

(54) **NEURAL NETWORK PROCESSOR, SYSTEM-ON-A-CHIP, DATA PROCESSING METHOD, AND STORAGE MEDIUM**

(30) Priority: 18.12.2024 CN 202411875301
(71) Applicant: Beijing Horizon Robotics Technology Research and Development Co., Ltd., Beijing 100094 (CN)
(72) Inventor: XU, Yongkang, Beijing, 100094 (CN); HE, Yibo, Beijing, 100094 (CN)
(74) Representative: V.O.

(57) **Abstract**

Disclosed are a neural network processor, a system-on-a-chip, a data processing method, and a storage medium, relating to the technical field of systems-on-a-chip. The neural network processor includes a first processor core, where the processor core includes: a first buffer, configured to buffer a first input tensor corresponding to a first neural network layer in the neural network model; a first direct memory access controller, configured to read a second input tensor corresponding to the first neural network layer from a second buffer, and write the second input tensor into an operational array; and the operational array, configured to read the first input tensor from the first buffer, and perform a first operation based on the first input tensor and the second input tensor, to obtain a first output tensor.

## Description

### FIELD OF THE INVENTION

This disclosure relates to the technical field of systems-on-a-chip, and in particular, to a neural network processor, a system-on-a-chip, a data processing method, and a storage medium.

### BACKGROUND OF THE INVENTION

Usually, when a complex neural network model is processed by using a neural network processor of a system-on-a-chip (SoC), and relatively more neural network layers are processed by a processor core in the neural network processor, it is needed to frequently initiate central processing unit (CPU) instructions to read a weight parameter and/or to-be-processed data from a higher-level buffer inside the processor core or from a memory outside the processor core, so as to perform an operation on the read weight parameter and/or to-be-processed data. A data reading manner of frequently initiating the CPU instructions may frequently occupy a CPU bus bandwidth, which not only increases usage of the CPU bus bandwidth and system power consumption, but also reduces computational efficiency of the neural network processor in processing the neural network model.

### SUMMARY OF THE INVENTION

A CPU bus bandwidth may be frequently occupied when a weight parameter and/or a part of to-be-processed data is read according to a data reading manner of CPU instructions, which not only increases usage of the CPU bus bandwidth and system power consumption, but also reduces computational efficiency of a neural network processor in processing a neural network model.

To resolve the foregoing technical problem, this disclosure provides a neural network processor, wherein the neural network processor includes a first processor core, and the first processor core includes:
a first buffer, configured to buffer a first input tensor corresponding to a first neural network layer in the neural network model;
a first direct memory access controller, configured to read a second input tensor corresponding to the first neural network layer from a second buffer, and write the second input tensor into an operational array; and
the operational array, configured to read the first input tensor from the first buffer, and perform a first operation corresponding to the first neural network layer based on the first input tensor and the second input tensor, to obtain a first output tensor.

According to a second aspect of this disclosure, a system-on-a-chip is provided, including an on-chip memory, a second direct memory access controller, and a neural network processor, wherein the neural network processor includes at least one processor core, and the at least one processor core includes a first processor core and a second processor core;
the on-chip memory is configured to buffer a fourth input tensor;
the second direct memory access controller is configured to read the fourth input tensor from the on-chip memory, and write the fourth input tensor into the first processor core and the second processor core;
the first processor core is configured to perform a fifth operation corresponding to a fifth neural network layer in the neural network model based on the fourth input tensor; and
the second processor core is configured to, in response to that the fourth input tensor is reused by a sixth neural network layer and the fifth neural network layer in the neural network model, perform a sixth operation corresponding to the sixth neural network layer based on the fourth input tensor.

An embodiment of a third aspect of this disclosure provides a data processing method, applied to a first processor core in a neural network processor, wherein the method includes:
buffering a first input tensor corresponding to a first neural network layer in a neural network model by a first buffer in the first processor core;
reading a second input tensor corresponding to the first neural network layer from a second buffer by a first direct memory access controller in the first processor core, and writing the second input tensor into an operational array in the first processor core; and
reading the first input tensor from the first buffer by using the operational array, and performing a first operation corresponding to the first neural network layer based on the first input tensor and the second input tensor, to obtain a first output tensor.

An embodiment of a fourth aspect of this disclosure provides an electronic device. The electronic device includes: a processor; and a memory, configured to store processor-executable instructions.

The processor is configured to read the executable instructions from the memory, and execute the instructions to implement the data processing method according to the third aspect.

An embodiment of a fifth aspect of this disclosure provides a computer readable storage medium. The storage medium stores a computer program that, when executed by a processor, causes the processor to implement the data processing method according to the third aspect.

In the neural network processor provided in the embodiments of this disclosure, since the first processor core includes the first direct memory access controller, the second input tensor stored in the second buffer can be directly read by the first direct memory access controller. Therefore, not only a reading speed for the second input tensor can be improved, but there is also no need to frequently initiate CPU instructions, which can reduce usage of a CPU bus bandwidth and system power consumption. Further, the operational array can relatively quickly perform the first operation corresponding to the first neural network layer on the first input tensor sent from the first buffer and the second input tensor written by the first direct memory access controller, which improves computational efficiency of the neural network processor in processing the neural network model.

### BRIEF DESCRIPTION OF THE DRAWINGS

FIG. 1 is a schematic diagram of a structure of a single processor core according to an exemplary embodiment of this disclosure;
FIG. 2 is a schematic diagram of a structure of a neural network processor according to an exemplary embodiment of this disclosure;
FIG. 3 is a schematic diagram of a structure of another neural network processor according to an exemplary embodiment of this disclosure;
FIG. 4 is a schematic diagram of a structure of still another neural network processor according to an exemplary embodiment of this disclosure;
FIG. 5 is a schematic diagram of a structure of yet another neural network processor according to an exemplary embodiment of this disclosure;
FIG. 6A is a schematic diagram of a structure of still yet another neural network processor according to an exemplary embodiment of this disclosure;
FIG. 6B is a schematic diagram of a structure of a further neural network processor according to an exemplary embodiment of this disclosure;
FIG. 7 is a schematic diagram of a structure of a still further neural network processor according to an exemplary embodiment of this disclosure;
FIG. 8 is a schematic diagram of a structure of a system-on-a-chip according to an exemplary embodiment of this disclosure;
FIG. 9 is a schematic diagram of a structure of another system-on-a-chip according to an exemplary embodiment of this disclosure;
FIG. 10 is a schematic flowchart of a data processing method according to an exemplary embodiment of this disclosure;
FIG. 11 is a schematic flowchart of another data processing method according to an exemplary embodiment of this disclosure;
FIG. 12 is a schematic flowchart of still another data processing method according to an exemplary embodiment of this disclosure;
FIG. 13 is a schematic flowchart of yet another data processing method according to an exemplary embodiment of this disclosure;
FIG. 14 is a schematic flowchart of still yet another data processing method according to an exemplary embodiment of this disclosure; and
FIG. 15 is a schematic diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Application overview

Currently, at least one neural network layer group in a neural network model is mainly processed by using a processor core in a neural network processor of a SoC, so as to fully utilize computing resources of the SoC, thereby accelerating an inference process of the neural network model and improving computational efficiency.

However, with development of deep learning technologies, the neural network model becomes increasingly complex, and the neural network layer group in the neural network model includes more neural network layers. Thus, a data volume of weight parameters and/or to-be-processed data corresponding to the neural network layers is also increasing. When a data volume of weight parameters and/or to-be-processed data corresponding to the neural network layer group is greater than an amount of data that can be stored in a level-1 buffer L1M in the processor core, it is needed to store some of the weight parameters and/or a part of the to-be-processed data into a higher-level buffer inside the processor core or into a memory outside the processor core.

Exemplary description is made in the following embodiments by using an example in which some of the weight parameters and/or a part of the to-be-processed data are stored into a level-2 buffer L2M with a higher level in the processor core when the amount of the data that can be stored in the level-1 buffer L1M in the processor core is less than a data volume of all weight parameters and/or to-be-processed data corresponding to the neural network layer group.

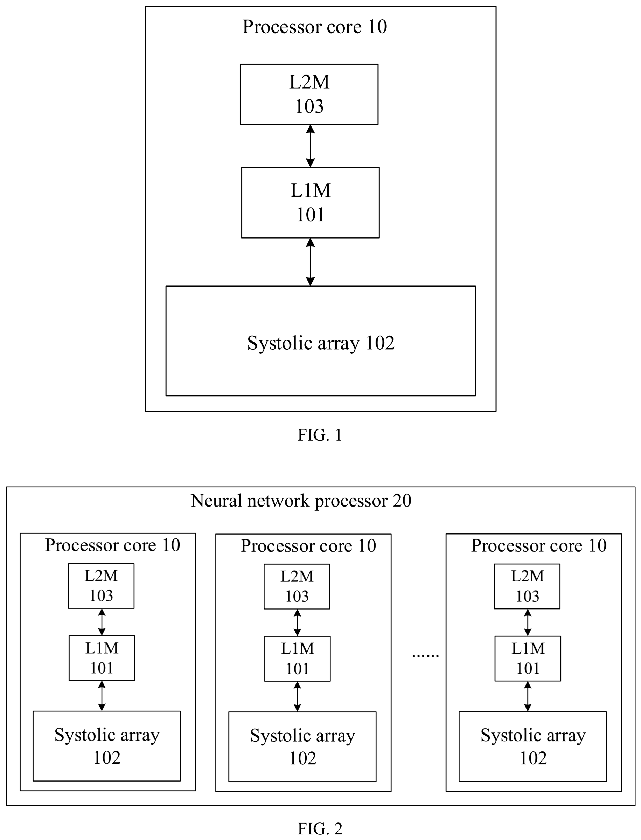

FIG. 1 is a schematic diagram of a structure of a single processor core according to an exemplary embodiment of this disclosure. As shown in FIG. 1, a processor core 10 may include a level-1 buffer (L1M) 101, a systolic array 102, and a level-2 buffer (L2M) 103.

The L1M 101 may communicate with the systolic array 102 through an internal bus in the processor core 10, and the L1M 101 may communicate with the L2M through a CPU bus.

The L1M 101 is configured to buffer some of weight parameters and/or a part of to-be-processed data corresponding to at least one neural network layer group that needs to be processed by the processor core 10. The L2M 103 is configured to buffer the other weight parameters and/or the other part of the to-be-processed data corresponding to the at least one neural network layer group that needs to be processed by the processor core 10. The systolic array 102 is configured to read the weight parameters and/or the to-be-processed data in the L1M 101 through the internal bus between the systolic array 102 and the L1M 101, and perform corresponding operations on the weight parameters and/or the to-be-processed data corresponding to the at least one neural network layer group.

Referring to FIG. 1, for example, the at least one neural network layer group that needs to be processed by the processor core 10 includes a first neural network layer group, the L1M 101 stores some weight parameters corresponding to the first neural network layer group, and the L2M 103 stores input feature data corresponding to the first neural network layer group and the other weight parameters corresponding to the first neural network layer group. When a first neural network layer among a plurality of neural network layers in the first neural network layer group is processed by the processor core 10, the input feature data stored in the L2M 103 may be read through CPU instructions, and may be written into the L1M 101 for corresponding operations. When other neural network layers among the plurality of neural network layers are processed by using the processor core 10, if weight data corresponding to the other neural network layers is stored in the L2M 103, it is also needed to read weight parameters corresponding to the other neural network layers from the L2M 103 through CPU instructions for corresponding operations. In other words, CPU instructions need to be frequently initiated when the first neural network layer group is processed by using the processor core 10. Therefore, a CPU bus bandwidth may be frequently occupied, which not only increases usage of the CPU bus bandwidth and system power consumption, but also reduces computational efficiency of the neural network processor in processing the neural network model.

FIG. 2 is a schematic diagram of a structure of a neural network processor according to an exemplary embodiment of this disclosure. As shown in FIG. 2, a neural network processor 20 may include a plurality of processor cores 10 as shown in FIG. 1.

Referring to FIG. 2, it may be learned that when the plurality of processor cores 10 in the neural network processor 20 simultaneously process neural network layer groups corresponding to the processor cores 10, CPU instructions may be initiated more frequently, and the bus bandwidth may also be occupied more frequently. As a result, bandwidth usage and system power consumption are extremely high, seriously affecting the computational efficiency of the neural network processor in processing the neural network model.

Regarding the foregoing technical problem, embodiments of this disclosure provide a neural network processor. A direct memory access controller is disposed in the processor core of the neural network processor, so that an access path to a higher-level buffer inside the processor core or to a memory outside the processor core may be established by using the direct memory access controller. Therefore, when the neural network layer group is processed by using the processor core, weight parameters or to-be-processed data stored in the higher-level buffer inside the processor core or the memory outside the processor core can be quickly read based on the direct memory access controller. Therefore, in this disclosure, there is no need to frequently initiate CPU instructions, which can reduce the bandwidth usage and the system power consumption, thereby improving the computational efficiency of the neural network processor in processing the neural network model.

### Exemplary circuit

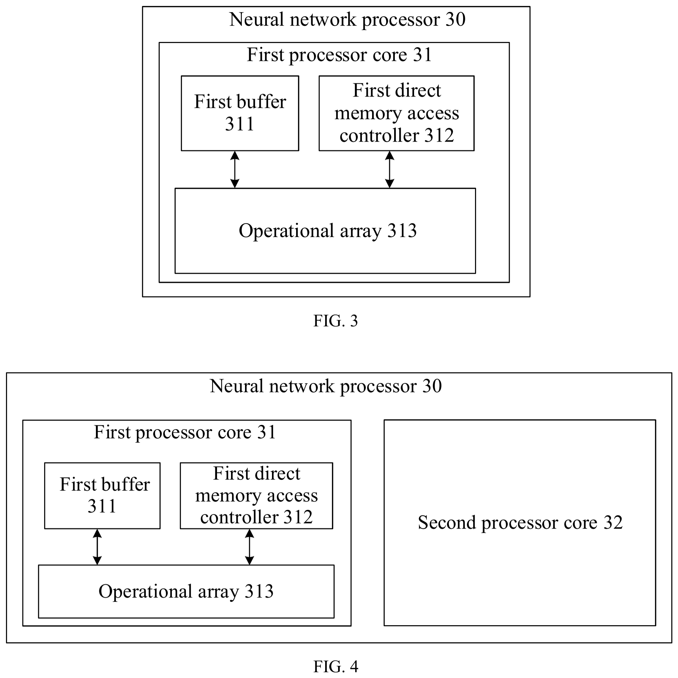

FIG. 3 is a schematic diagram of a structure of another neural network processor according to an exemplary embodiment of this disclosure. As shown in FIG. 3, a neural network processor 30 includes a first processor core 31. The first processor core 31 includes a first buffer 311, a first direct memory access controller 312, and an operational array 313.

The first buffer 311 is configured to buffer a first input tensor corresponding to a first neural network layer in the neural network model. The first direct memory access controller 312 is configured to read a second input tensor corresponding to the first neural network layer from a second buffer, and write the second input tensor into the operational array 313. The operational array 313 is configured to read the first input tensor from the first buffer 311, and perform a first operation corresponding to the first neural network layer based on the first input tensor and the second input tensor, to obtain a first output tensor.

For example, the neural network processor 30 may include one or more processor cores. A quantity of the processor cores included in the neural network processor 30 is not limited in this embodiment of this disclosure. Exemplary description is made in this embodiment of this disclosure by using an example in which the neural network processor 30 includes N processor cores, where N is an integer greater than or equal to 1. The first processor core 31 may be any one of the N processor cores.

For example, an access speed of the first buffer 311 is greater than that of the second buffer. In some examples, the first buffer 311 may be a level-1 buffer LIM in the first processor core 31. The second buffer may be either a level-2 buffer L2M inside the first processor core 31, or a L2M or a DDR outside the first processor core 31. A type of the second buffer is not limited in this embodiment of this disclosure. The first processor core 31 may or may not include the second buffer. When the second buffer is the level-2 buffer L2M in the first processor core 31, the first processor core 31 includes the second buffer. When the second buffer is the L2M or the DDR outside the first processor core 31, the first processor core 31 does not include the second buffer. Exemplary description is made in the following embodiments by using an example in which the second buffer is the DDR outside the first processor core 31.

The first direct memory access controller 312 may be a remote direct memory access (RDMA) controller disposed between the second buffer and the operational array 313. The operational array 313 may be a circuit configured to perform operations corresponding to a neural network layer group, and may also be referred to as a systolic array. If the second input tensor is buffered in the second buffer, the second buffer may be directly accessed through the first direct memory access controller 312 to read the second input tensor in the second buffer, and the second input tensor may be written into the operational array 313, so that the operational array 313 can perform the corresponding first operation based on the second input tensor.

The first neural network layer may be any neural network layer in one or more neural network layer groups processed by the first processor core 31. For example, the one or more neural network layer groups processed by the first processor core 31 may include a plurality of neural network layers that are sequentially coupled in series. In some examples, according to a sequence of the plurality of neural network layers, the plurality of neural network layers may include a first neural network layer, a plurality of intermediate neural network layers, and a last neural network layer. The first neural network layer may be any one of the plurality of neural network layers. Exemplary description is made in the following embodiments by using an example in which the first neural network layer is the first neural network layer among the plurality of neural network layers.

For example, if the first neural network layer is the first neural network layer in the neural network layer group, to-be-processed data corresponding to the first neural network layer is to-be-processed data corresponding to the neural network layer group. In some examples, the to-be-processed data may be to-be-processed feature data. For example, the to-be-processed data corresponding to the first neural network layer may be first input feature data.

That the to-be-processed data corresponding to the first neural network layer is the first input feature data is used as an example. In some examples, the first input tensor may be a first weight parameter corresponding to the first neural network layer, and the second input tensor may be the first input feature data. In some other examples, the first input tensor may be the first input feature data, and the second input tensor may be a first weight parameter corresponding to a first neural network layer. Data types of the first input tensor and the second input tensor are not limited in this embodiment of this disclosure. Exemplary description is made in the following embodiments by using an example in which the first input tensor is the first weight parameter and the second input tensor is the first input feature data.

For example, the first operation corresponding to the first neural network layer includes at least one of a linear transformation, a convolution operation, and a pooling operation. A type of the first operation corresponding to the first neural network layer is not limited in this embodiment of this disclosure. Exemplary description is made below by using an example in which the first operation corresponding to the first neural network layer includes a linear operation. For example, the first operation corresponding to the first neural network layer may include a multiplication operation.

It may be understood that a SOC may write weight data and to-be-processed data corresponding to the neural network model into the DDR at an initialization stage, and then write the weight data in the DDR into L1Ms of the corresponding processor cores, respectively. If capacity of the L1M of the processor core is less than a data volume of weight parameters corresponding to the processor core, some of the weight parameters corresponding to the processor core may be written into the L1M, and the other weight parameters corresponding to the processor core may still be stored in the DDR or may be written into a higher-level buffer (such as the L2M).

For example, the first input tensor is the first weight parameter, and a data volume of the first weight parameter is smaller than the capacity of the first buffer 311. The SOC may write the first weight parameter into the first buffer 311, so that the first input tensor is buffered in the first buffer 311.

For example, that the first direct memory access controller 312 reads the second input tensor corresponding to the first neural network layer from the second buffer and writes the second input tensor into the operational array 313 may include: the first direct memory access controller 312 receives a first read address and a first write address sent from the operational array 313, reads the second input tensor corresponding to the first neural network layer from the second buffer based on the first read address, and writes the second input tensor to a corresponding storage position in the operational array 313 based on the first write address.

For example, the first read address may be an address at which the second input tensor is buffered in the second buffer, and may be generated by using the operational array 313. The first write address may be an address for buffering the second input tensor in the operational array 313, and may also be generated by using the operational array 313. In some examples, the operational array 313 may include an address generator. The address generator may configure a starting address of the address generator according to configuration instructions, so that the address generator may calculate the first read address and the first write address based on the first address, and send the first read address and the first write address to the first direct memory access controller 312.

That the operational array 313 reads the first input tensor from the first buffer 311 may include: the operational array 313 generates a second read address and a second write address, and sends the second read address and the second write address to the first buffer 311, which reads the first input tensor based on the second read address, and writes the first input tensor to a corresponding storage position in the operational array 313 based on the second write address.

For example, the second read address may be an address at which the first input tensor is stored in the first buffer 311, and may be generated by the operational array 313. The second write address may be an address for storing the first input tensor in the operational array 313, and may also be generated by using the operational array 313. An implementation manner of generating the second read address and the second write address by the operational array 313 is not described in detail in this embodiment of this disclosure.

In some examples, the first buffer 311 may include a plurality of first storage units and a first buffer controller. The first buffer controller may read the first input tensor from the plurality of first storage units based on the second read address, and send the first input tensor to a corresponding storage position in the operational array 313 based on the second write address.

For example, taking the first operation being a multiplication operation as an example, the operational array 313 may perform a multiplication operation on the first input tensor and the second input tensor to obtain the first output tensor of the first neural network layer. The first output tensor of the first neural network layer may also be referred to as first output feature data.

In the neural network processor provided in this embodiment of this disclosure, since the first processor core includes the first direct memory access controller, the second input tensor stored in the second buffer can be directly read by the first direct memory access controller, which not only avoids impact of resource preemption of a CPU bus, but also can avoid frequent initiation of CPU instructions. Therefore, not only a reading speed for the second input tensor can be improved, but there is also no need to frequently initiate CPU instructions, which can reduce usage of a CPU bus bandwidth and system power consumption. Further, the operational array can relatively quickly perform the first operation corresponding to the first neural network layer on the first input tensor sent from the first buffer and the second input tensor written by the first direct memory access controller, which improves computational efficiency of the neural network processor in processing the neural network model.

In some other embodiments of this disclosure, the first input tensor and the second input tensor corresponding to the first neural network layer may be stored in the first buffer 311. In this way, the operational array 313 may directly read the first input tensor and the second input tensor from the first buffer 311, so as to perform the first operation corresponding to the first neural network layer based on the first input tensor and the second input tensor to obtain the first output tensor.

In still some other embodiments of this disclosure, the first input tensor and the second input tensor corresponding to the first neural network layer may be stored in the second buffer. In this way, the operational array 313 may read the first input tensor and the second input tensor from the second buffer based on the first direct memory access controller 312, so as to perform the first operation corresponding to the first neural network layer based on the first input tensor and the second input tensor to obtain the first output tensor.

In some embodiments of this disclosure, at least two neural network layers in the neural network layer group that needs to be processed by the first processor core 31 may correspond to a same input tensor (that is, a weight parameter). In other words, the at least two neural network layers may reuse the same input tensor. A quantity of the at least two neural network layers may be 2, 3, or 4, and a quantity of neural network layers in the at least two neural network layers is not limited in the embodiments of this disclosure. Exemplary description is made in the following embodiments by using an example in which the at least two neural network layers include a second neural network layer and a third neural network layer.

In some examples, the second neural network layer and the third neural network layer in the neural network layer group that needs to be processed by the first processor core 31 reuse a same weight parameter, which is a third input tensor. Referring to FIG. 3 again, the first direct memory access controller 312 is further configured to, in response to that the third input tensor is reused by the second neural network layer and the third neural network layer in the neural network model, read the third input tensor from the second buffer and write the third input tensor into the operational array 313; and the operational array 313 is further configured to perform, based on the third input tensor, a second operation corresponding to the second neural network layer and a third operation corresponding to the third neural network layer.

For example, the second neural network layer may be any one of the plurality of neural network layers that need to be processed by the first processor core 31, and may be same as or different from the first neural network layer. A relationship between the second neural network layer and the first neural network layer is not limited in the embodiments of this disclosure. Exemplary description is made in the following embodiments by using an example in which the second neural network layer is different from the first neural network layer.

The third neural network layer may be any neural network layer that is different from the second neural network layer among the plurality of neural network layers that need to be processed by the first processor core 31, and may be same as or different from the first neural network layer. A relationship between the third neural network layer and the first neural network layer is not limited in the embodiments of this disclosure. Exemplary description is made in the following embodiments by using an example in which the third neural network layer is different from the first neural network layer.

In some examples, the third neural network layer may be a neural network layer next to the second neural network layer, or may be a neural network layer that is subsequent to the second neural network layer and is connected to the second neural network layer through other neural network layers. Exemplary description is made in the following embodiments by using an example in which the third neural network layer is a neural network layer next to the second neural network layer.

In some examples, the third input tensor may be a second weight parameter reused by the second neural network layer and the third neural network layer. In some examples, the third input tensor may be buffered in either the first buffer 311 or the second buffer. A buffer position of the third input tensor is not limited in the embodiments of this disclosure, and exemplary description is made in the following embodiments by using an example in which the third input tensor is buffered in the second buffer.

For example, the second operation corresponding to the second neural network layer and the third operation corresponding to the third neural network layer may be same as or different from the first operation corresponding to the first neural network layer. Specific implementation of the second operation corresponding to the second neural network layer and the third operation corresponding to the third neural network layer is not limited in the embodiments of this disclosure.

For example, the third input tensor is buffered in the second buffer. Referring to FIG. 3, since the third input tensor is reused by the second neural network layer and the third neural network layer, when processing the second neural network layer and/or the third neural network layer, the operational array 313 generates a third read address and a third write address, and sends the third read address and the third write address to the first direct memory access controller 312. Therefore, when receiving the third read address and the third write address, the first direct memory access controller 312 may determine that the third input tensor is reused by the third neural network layer and the second neural network layer. The first direct memory access controller 312 may read the third input tensor based on the third read address and the third write address, and write the third input tensor into the operational array 313.

In some examples, the third read address may correspond to an address at which the third input tensor is stored in the second buffer, and the third write address may correspond to an address for storing the third input tensor in the operational array 313. Similar to the implementation manner of the first read address and/or the second read address, the third read address may also be generated by using the operational array 313. An implementation manner of generating a third address by the operational array 313 is not described in detail in the embodiments of this disclosure.

For example, the first direct memory access controller 312 may read the second weight parameter from the second buffer based on the third read address, and write the second weight parameter to a corresponding storage position in the operational array 313 based on the third write address.

In some examples, that the operational array 313 performs the second operation corresponding to the second neural network layer based on the second weight parameter may include: the operational array 313 performs a multiplication operation on second input feature data and the second weight parameter based on the second input feature data corresponding to the second neural network layer, to obtain second output feature data.

For example, the third neural network layer is a neural network layer next to the second neural network layer. After performing the second operation corresponding to the second neural network layer based on the second weight parameter, the operational array 313 may continue to process the third neural network layer. Moreover, when processing the third neural network layer, the operational array 313 may directly perform the third operation corresponding to the third neural network layer based on the second weight parameter at the third write address while generating the third read address and the third write address.

In some examples, that the operational array 313 directly performs the third operation corresponding to the third neural network layer based on the second weight parameter in the operational array 313 may include: the operational array 313 directly performs a multiplication operation on the second weight parameter in the operational array 313 and the second output feature data (corresponding to third input feature data of the third neural network layer), to obtain third output feature data.

For example, the third neural network layer is a neural network layer that is subsequent to the second neural network layer and is connected to a second neural network through other neural network layers. When processing the third neural network layer, the operational array 313 may generate and send the third read address and the third write address to the first direct memory access controller 312 again. Further, the first direct memory access controller 312 reads the second weight parameter based on the third read address and the third write address, and writes the second weight parameter into the operational array 313. Thus, the operational array 313 may perform the third operation corresponding to the third neural network layer based on the second weight parameter.

According to the neural network processor provided in the embodiments of this disclosure, when the third input tensor is reused by the second neural network layer and the third neural network layer and is buffered in the second buffer, the third input tensor can be quickly read by the first direct memory access controller, and then the operational array can quickly perform the second operation corresponding to the second neural network layer based on the third input tensor, and quickly perform the third operation corresponding to the third neural network layer based on the third input tensor. In this case, computational efficiency of the operational array is improved.

In some other examples, at least two neural network layers in the neural network layer group processed by the first processor core 31 may reuse same input feature data. For example, a fourth neural network layer and a neural network layer next to the first neural network layer in the neural network layer group processed by the first processor core 31 reuse same input feature data, which is the first output tensor.

Referring to FIG. 3 again, the operational array 313 is further configured to, in response to that a reusing control instruction instructs the fourth neural network layer in the neural network model to reuse the first output tensor, write the first output tensor into the first buffer 311 based on the reusing control instruction, and/or write the first output tensor into the second buffer through the first direct memory access controller 312.

The operational array 313 is further configured to read the first output tensor from the first buffer 311 and/or read the first output tensor from the second buffer through the first direct memory access controller 312; and to perform a fourth operation corresponding to the fourth neural network layer based on the first output tensor.

It may be understood that input feature data and output feature data of all neural network layers may be determined at a design stage of the neural network model, so that whether feature data is reused in the neural network layer group may be determined. When it is determined that feature data is reused in the neural network layer group, a reusing control instruction used to control the operational array in the corresponding processor core to perform feature reusing may be generated.

For example, the reusing control instruction may be a control instruction used to control saving and reading of reused feature data. The reusing control instruction may include a reused feature identifier and an address for storing a reused feature. In some examples, if the reused feature is the first output tensor, the reused feature identifier may be an identifier of the first output tensor, and the address for storing the reused feature may be either a fourth write address for storing the first output tensor in the first buffer, or a fifth write address for storing the first output tensor in the second buffer.

For example, the fourth neural network layer may be a neural network layer, in the neural network layer group processed by the first processor core 31, that is subsequent to the first neural network layer and is connected to the first neural network layer through other neural network layers. In some examples, the fourth neural network layer may be same as the second neural network layer or the third neural network layer, or may be different from the second neural network layer and/or the third neural network layer. A relationship between the fourth neural network layer and the second neural network layer and the third neural network layer is not limited in the embodiments of this disclosure. Exemplary description is made in the following embodiments by using an example in which the fourth neural network layer is different from the second neural network layer and the third neural network layer.

The fourth operation corresponding to the fourth neural network layer may be same as or different from the first operation corresponding to the first neural network layer. Specific implementation of the fourth operation corresponding to the fourth neural network layer is not limited in the embodiments of this disclosure.

For example, referring to FIG. 3 again, the operational array 313 may determine to reuse the first output tensor based on the reused feature identifier in the reusing control instruction. Further, after performing the first operation corresponding to the first neural network layer based on the first input tensor and the second input tensor to obtain the first output tensor, the operational array 313 obtains an address for storing the first output tensor in the reusing control instruction; writes the first output tensor to the fourth write address in the first buffer when the address for storing the first output tensor is the fourth write address in the first buffer 311; and sends the fifth write address and the first output tensor to the first direct memory access controller 312 when the address for storing the first output tensor is the fifth write address in the second buffer. In response to the fifth write address and the first output tensor, the first direct memory access controller 312 stores a first output feature data to the fifth write address in the second buffer. The fourth write address may be an address for buffering the first output tensor in the first buffer 311, and the fifth write address may be an address for buffering the first output tensor in the second buffer.

Further, the operational array 313 may generate and send a fourth read address (corresponding to the fourth write address) and a sixth write address to the first buffer 311 when the fourth neural network layer is processed by the first processor core 31. The first buffer 311 may read the first output tensor based on the fourth read address, and write the first output tensor to a corresponding storage position in the operational array 313 based on the sixth write address. The fourth read address may be an address for buffering the first output tensor in the first buffer 311, and the sixth write address may be an address for buffering the first output tensor in the operational array 313.

In some examples, the operational array 313 may generate and send a fifth read address (corresponding to the fifth write address) and a seventh write address to the first direct memory access controller 312 when the fourth neural network layer is processed by the first processor core 31. The first direct memory access controller 312 reads the first output tensor from the second buffer based on the fifth read address, and writes the first output tensor to a corresponding storage position in the operational array 313 based on the seventh write address. The fifth read address may be an address for buffering the first output tensor in the second buffer, and the seventh write address may be an address for buffering the first output tensor in the operational array 313.

Since the manners of generating the fourth read address, the sixth write address, the fifth read address, and the seventh write address by the operational array 313 are similar to the implementation manner of generating the first read address and the first write address by the operational array 313, details are not described in the embodiments of this disclosure.

The implementation manner for the first buffer 311 to read the first output tensor based on the fourth read address and write the first output tensor to the corresponding storage position in the operational array 313 based on the sixth write address is similar to that for the first buffer 311 to read the first input tensor based on the second read address and write the first input tensor to the corresponding storage position in the operational array 313 based on the second write address, details are not described in the embodiments of this disclosure.

That the operational array 313 performs the fourth operation corresponding to the fourth neural network layer based on the first output tensor may include: the operational array 313 performs a multiplication operation on the first output tensor and a third weight parameter corresponding to the fourth neural network layer, to obtain a fourth output feature corresponding to the fourth neural network layer.

According to the neural network processor provided in the embodiments of this disclosure, when the first output tensor is reused by the fourth neural network layer, the operational array stores the first output tensor into the first buffer or the second buffer. Moreover, when the fourth neural network layer is processed by the first processor core, the first output tensor can be written into the operational array through the first buffer, or can be quickly read through the first direct memory access controller and written into the operational array. Thus, based on the first output tensor, the fourth operation corresponding to the fourth neural network layer can be performed relatively quickly, thereby improving the computational efficiency of the operational array.

In some embodiments of this disclosure, at least two processor cores in the neural network processor may process neural network layers with a same weight parameter. In other words, the at least two processor cores may reuse the same weight parameter.

For example, a quantity of processor cores in the at least two processor cores may be any value greater than or equal to 2 and less than or equal to N. In some examples, the at least two processor cores may include two processor cores. In some other examples, the at least two processor cores may include three processor cores. The quantity of the processor cores in the at least two processor cores is not limited in the embodiments of this disclosure. Exemplary description is made in the embodiments of this disclosure by using an example in which the at least two processor cores include a first processor core and a second processor core.

For example, the first processor core and the second processor core reuse a same weight parameter. In some examples, at least one neural network layer processed by the first processor core and at least one neural network layer processed by the second processor core may reuse a same weight parameter. For example, one neural network layer processed by the first processor core and one neural network layer processed by the second processor core reuse a same weight parameter. For another example, two neural network layers processed by the first processor core and one neural network layer processed by the second processor core reuse a same weight parameter. Exemplary description is made in the embodiments of this disclosure by using an example in which one neural network layer processed by the first processor core and one neural network layer processed by the second processor core reuse a same weight parameter.

When a fifth neural network layer processed by the first processor core and a sixth neural network layer processed by the second processor core reuse a same weight parameter that is a fourth input tensor, it is needed to buffer the fourth input tensor into a first buffer or a second buffer corresponding to the first processor core, and into a first buffer or a second buffer corresponding to the second processor core, respectively. In this case, area overhead of the first buffer or the second buffer may be increased.

Regarding the foregoing technical problem, an embodiment of this disclosure provides a neural network processor, in which the fourth input tensor reused by the fifth neural network layer processed by the first processor core and the sixth neural network layer processed by the second processor core is buffered on an on-chip memory outside the neural network processor, and then a second direct memory access controller is disposed between the on-chip memory and the neural network processor. Moreover, when the fifth neural network layer is processed by the first processor core, the fourth input tensor on the on-chip memory is read by using the second direct memory access controller, so as to enable the first processor core to process the fifth neural network layer. Moreover, when the sixth neural network layer is processed by the second processor core, the fourth input tensor on the on-chip memory is read by the second direct memory access controller, so as to enable the second processor core to process the sixth neural network layer.

As shown in FIG. 4, on the basis of the embodiments shown in FIG. 3, the neural network processor 30 further includes a second processor core 32.

The first processor core 31 is configured to read the fourth input tensor corresponding to the fifth neural network layer in the neural network model from the on-chip memory through the second direct memory access controller, and perform a fifth operation corresponding to the fifth neural network layer based on the fourth input tensor.

The second processor core 32 is configured to, in response to that the fourth input tensor is reused by the sixth neural network layer and the fifth neural network layer in the neural network model, read the fourth input tensor from the on-chip memory through the second direct memory access controller and perform a sixth operation corresponding to the sixth neural network layer based on the fourth input tensor.

For example, the fifth neural network layer may be a neural network layer with any input tensor including the fourth input tensor among the plurality of neural network layers processed by the first processor core 31. In some examples, the fifth neural network layer may be same as any one of the first neural network layer, the second neural network layer, the third neural network layer, and the fourth neural network layer; or may be different from the first neural network layer, the second neural network layer, the third neural network layer, and the fourth neural network layer. A relationship between the fifth neural network layer and the first neural network layer, the second neural network layer, the third neural network layer, and the fourth neural network layer is not limited in the embodiments of this disclosure. Exemplary description is made in the embodiments of this disclosure by using an example in which the fifth neural network layer is different from the first neural network layer, the second neural network layer, the third neural network layer, and the fourth neural network layer.

For example, the sixth neural network layer may be a neural network layer with any input tensor including the fourth input tensor among the plurality of neural network layers processed by the second processor core 32. This is similar to the implementation of the fifth neural network layer, and details are not described in the embodiments of this disclosure.

Correspondingly, the fifth operation corresponding to the fifth neural network layer and the sixth operation corresponding to the sixth neural network layer may be same as any one of the first operation corresponding to the first neural network layer, the second operation corresponding to the second neural network layer, the third operation corresponding to the third neural network layer, and the fourth operation corresponding to the fourth neural network layer; or may be different from the first operation corresponding to the first neural network layer, the second operation corresponding to the second neural network layer, the third operation corresponding to the third neural network layer, and the fourth operation corresponding to the fourth neural network layer. Types of the fifth operation corresponding to the fifth neural network layer and the sixth operation corresponding to the sixth neural network layer are not limited in the embodiments of this disclosure.

For example, the fourth input tensor may be a fourth weight parameter that is reused by the fifth neural network layer and the sixth neural network layer. In some examples, the fourth weight parameter may be same as any one of the first weight parameter, the second weight parameter, and the third weight parameter; or may be different from the first weight parameter, the second weight parameter, and the third weight parameter. Specific implementation of the fourth weight parameter is not limited in the embodiments of this disclosure. Exemplary description is made in the embodiments of this disclosure by using an example in which the fourth weight parameter is different from the first weight parameter, the second weight parameter, and the third weight parameter.

The on-chip memory may be a DDR other than the neural network processor (that is, other than the first processor core 31 and the second processor core 32) on the SOC. The on-chip memory may be configured to store the fourth input tensor reused by the first processor core 31 and the second processor core 32. In some examples, the on-chip memory may be configured to store the fourth weight parameter.

The second direct memory access controller may be an RDMA coupled between the on-chip memory and the neural network processor.

In some examples, the first processor core 31 may generate and send a sixth read address and an eighth write address to the second direct memory access controller when processing the fifth neural network layer. The second direct memory access controller may read the fourth weight parameter from the on-chip memory based on the sixth read address, and write the fourth weight parameter to a corresponding storage position in the first processor core 31 based on the eighth write address. The sixth read address may be an address at which the fourth input tensor is stored in the on-chip memory, and the eighth write address may be an address for buffering the fourth input tensor in the first processor core 31.

In some examples, the eighth write address may be an address in the second buffer of the first processor core 31. Therefore, after the fourth input tensor is written into the second buffer, it is also needed to read the fourth input tensor from the second buffer through the first direct memory access controller 312, and write the fourth input tensor into the operational array 313.

For implementation manners of writing the fourth input tensor into the second buffer, and reading the fourth input tensor from the second buffer through the first direct memory access controller 312 and writing the fourth input tensor into the operational array 313, reference may be made to relevant description in the embodiments shown in FIG. 3, and details are not described in the embodiments of this disclosure.

Since the implementation manner of performing the fifth operation corresponding to the fifth neural network layer based on the fourth input tensor is similar to those of performing the first operation corresponding to the first neural network layer based on the first input tensor and the second input tensor, performing the second operation corresponding to the second neural network layer based on the third input tensor, ..., details are not described in the embodiments of this disclosure.

In some examples, if the read address generated by the first processor core 31 when processing the fifth neural network layer is same as the read address generated by the second processor core 32 when processing the sixth neural network layer, and is the sixth read address, it is determined that the fourth input tensor is reused by the sixth neural network layer and the fifth neural network layer.

For example, the second processor core 32 may generate and send the sixth read address and a ninth write address to the second direct memory access controller when processing the sixth neural network layer. The second direct memory access controller reads the fourth weight parameter from the on-chip memory based on the sixth read address, and write the fourth weight parameter to a corresponding storage position in the second processor core 32 based on the ninth write address. The ninth write address is an address for buffering the fourth input tensor in the second processor core 32.

In some examples, the ninth write address may be an address in the second buffer of the second processor core 32. Similar to the first processor core 31, after the fourth input tensor is written into the second buffer of the second processor core 32, it is also needed to write the fourth input tensor into an operational array in the second processor core 32 through the first direct memory access controller in the second processor core 32.

For implementation manners of writing the fourth input tensor into the second buffer of the second processor core 32, and writing the fourth input tensor into the operational array in the second processor core 32 through the first direct memory access controller in the second processor core 32, reference may be made to relevant description in the embodiments shown in FIG. 3, and details are not described in the embodiments of this disclosure.

Since the implementation manner of performing the sixth operation corresponding to the sixth neural network layer based on the fourth input tensor is similar to those of performing the first operation corresponding to the first neural network layer based on the first input tensor and the second input tensor, performing the second operation corresponding to the second neural network layer based on the third input tensor, ..., details are not described in the embodiments of this disclosure.

According to the neural network processor provided in the embodiments of this disclosure, when the fifth neural network layer is processed by the first processor core, the fourth input tensor corresponding to the fifth neural network layer can be quickly read from the on-chip memory by using the second direct memory access controller, so as to perform the fifth operation corresponding to the fifth neural network layer based on the fourth input tensor, thereby accelerating a computing speed of the first processor core. Moreover, when the sixth neural network layer is processed by the second processor core, the fourth input tensor corresponding to the sixth neural network layer can be quickly read from the on-chip memory by using the second direct memory access controller, so as to perform the sixth operation corresponding to the sixth neural network layer based on the fourth input tensor, thereby accelerating a computing speed of the second processor core. Meanwhile, since the fourth input tensor only needs to be stored in the on-chip memory, there is no need to separately store the fourth input tensor in the first processor core and the second processor core, which can reduce area overhead of the buffer.

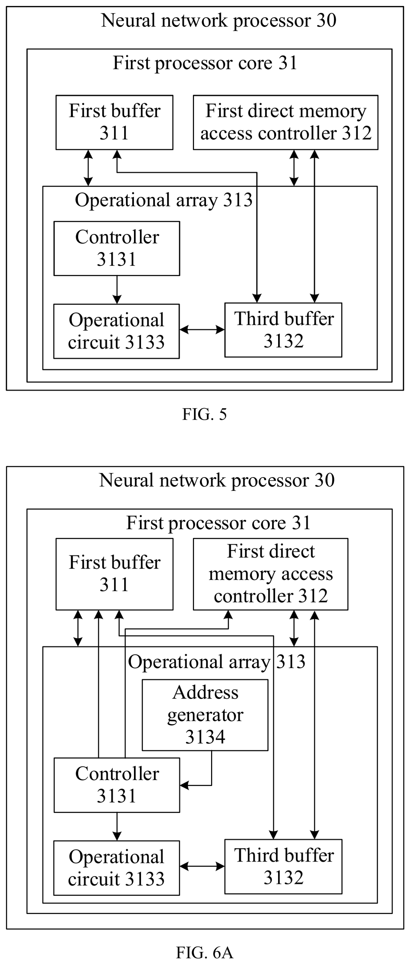

As shown in FIG. 5, on the basis of the embodiments shown in FIG. 3, the operational array 313 may include a controller 3131, a third buffer 3132, and an operational circuit 3133.

The controller 3131 is configured to read the first input tensor from the first buffer 311, write the first input tensor into the third buffer, and generate an operational control signal.

The first direct memory access controller 312 is configured to read the second input tensor from the second buffer, and write the second input tensor into the third buffer 3132.

The third buffer 3132 is configured to buffer the first input tensor and the second input tensor.

The operational circuit 3133 is configured to, in response to the operational control signal, read the first input tensor and the second input tensor from the third buffer, and perform the first operation based on the first input tensor and the second input tensor to obtain the first output tensor.

For example, the controller 3131 may be a hardware logic circuit specifically designed for specific requirements of the systolic array; and the controller 3131 may be configured to manage and coordinate data flow and operations of processing units in the entire operational array.

The third buffer 3132 may be configured to buffer data to be computed by the operational array 313, and the operational array 313 can only read the data buffered in the third buffer 3132.

The operational circuit 3133 is a basic unit responsible for performing actual computing tasks in the systolic array. In some examples, the operational circuit 3133 may include a plurality of operation units (processing elements PEs) arranged according to a certain rule. The PEs are interconnected and work together to complete complex computing tasks.

In some examples, the second write address may be an address for buffering the first input tensor in the third buffer 3132 of the operational array 313. The controller 3131 may obtain the second read address and the second write address, and send the second read address and the second write address to the first buffer 311. The first buffer 311 reads the first input tensor based on the second read address, and writes the first input tensor to a corresponding position in the third buffer 3132 based on the second write address. The second write address is an address in the third buffer 3132 of the operational array 313.

In some examples, the first write address may be an address for buffering the second input tensor in the third buffer 3132 of the operational array 313. The first direct memory access controller 312 may write the second input tensor to a corresponding position in the third buffer 3132 based on the first write address.

For example, the operational control signal may be a signal that controls the operational circuit 3133 to perform the first operation. In some examples, the operational control signal may be used to control start time and end time of an operation, and a type of an operation performed by the operational circuit 3133.

According to the neural network processor provided in the embodiments of this disclosure, the first input tensor is read and is written into the third buffer by the controller, and the second input tensor is read from the second buffer and is written into the third buffer by the first direct memory access controller. In this way, the operational circuit can perform the first operation corresponding to the operational control signal on the first input tensor and the second input tensor, which ensures that each PE in the operational circuit can perform computing tasks according to a predetermined order and rules, thereby implementing efficient parallel computing.

In some other embodiments, as shown in FIG. 6A, on the basis of the embodiments shown in FIG. 5, the operational array 313 may further include an address generator 3134, which may be coupled to the controller 3131. The address generator 3134 may generate the first read address, the first write address, the second read address, and the second write address; and send the first read address, the first write address, the second read address, and the second write address to the controller 3131. By the controller 3131, the first read address and the first write address are sent to the first direct memory access controller 312, and the second read address and the second write address are sent to the first buffer 311.

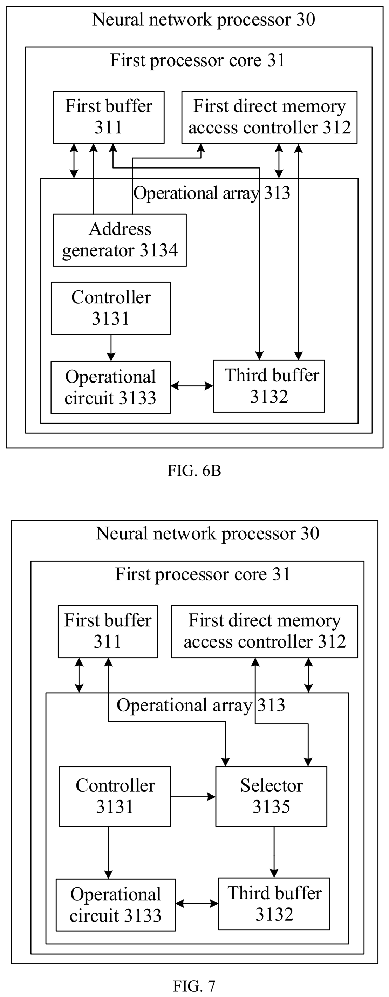

In still some other embodiments, as shown in FIG. 6B, on the basis of the embodiments shown in FIG. 5, the operational array 313 may further include an address generator 3134, which may be coupled to the first buffer 311 and the first direct memory access controller 312. The address generator 3134 may generate the first read address, the first write address, the second read address, and the second write address; send the first read address and the first write address to the first direct memory access controller 312; and send the second read address and the second write address to the first buffer 311.

Thus, the first direct memory access controller 312 may read the second input tensor from the second buffer based on the first read address, and write the second input tensor into the third buffer 3132 in the operational array 313 based on the first write address. The first buffer 311 may read the first input tensor from the first buffer 311 based on the second read address, and write the first input tensor into the third buffer 3132 in the operational array 313 based on the second write address.

In some embodiments of this disclosure, as shown in FIG. 7, on the basis of the embodiments shown in FIG. 5, the operational array 313 may further include a selector 3135.

The controller 3131 is specifically further configured to generate a selection control signal. The selector 3135 is configured to, in response to the selection control signal, select to output the first input tensor in the first buffer 311 to the third buffer or output the second input tensor in the first direct memory access controller 312 to the third buffer 3132.

For example, the selector 3135 may be an either-or selector, and may include a first input end, a second input end, a control end, and an output end. The first input end may be coupled to the first buffer 311, the second input end may be coupled to the first direct memory access controller 312; the control end may be coupled to the controller 3131; and the output end may be coupled to the third buffer 3132.

For example, the selection control signal may be a signal that controls the selector 3135 to form a first data transmission path between the first buffer 311 and the third buffer 3132, or a second data transmission path between the first direct memory access controller 312 and the third buffer 3132. In some examples, the selection control signal includes a first voltage signal. In some other examples, the selection control signal includes a second voltage signal.

For example, the first voltage signal and the second voltage signal may be signals with opposite level. In some examples, the first voltage signal may be a signal corresponding to logic high level "1", and the second voltage signal may be a signal corresponding to logic low level "0". In some other examples, the first voltage signal may be a signal corresponding to logic low level "1", and the second voltage signal may be a signal corresponding to logic high level "0". Implementation manners of the first voltage signal and the second voltage signal are not limited in the embodiments of this disclosure. Exemplary description is made in the embodiments of this disclosure by using an example in which the first voltage signal is a signal corresponding to the logic high level "1", and the second voltage signal is a signal corresponding to the logic low level "0".

For example, the selection control signal is the first voltage signal. In some examples, the controller 3131 may generate the first voltage signal when sending the second read address and the second write address to the first buffer 311.

For example, the selection control signal is the second voltage signal. In some examples, the controller 3131 may generate the second voltage signal when sending the first read address and the first write address to the first direct memory access controller 312.

For example, in response to that the selection control signal is the first voltage signal, the selector 3125 may form the first data transmission path between the first buffer 311 and the third buffer 3132, so that the first buffer 311 may send the first input tensor to the third buffer 3132 based on the first data transmission path after reading the first input tensor. In response to that the selection control signal is the second voltage signal, the selector 3125 may form the second data transmission path between the first direct memory access controller 312 and the third buffer 3132, so that the first direct memory access controller 312 may send the second input tensor to the third buffer 3132 based on the second data transmission path after reading the second input tensor.

According to the neural network processor provided in the embodiments of this disclosure, the selector is disposed in the operational array, and the controller is used to control the selector to select to form the first data transmission path between the first buffer and the third buffer or the second data transmission path between the first direct memory access controller and the third buffer. In this way, the first buffer can write the first input tensor into the third buffer based on the first data transmission path, and the first direct memory access controller can write the second input tensor into the third buffer based on the second data transmission path, so as to select and switch between writing the first input tensor and the second input tensor into the third buffer.

In some embodiments of this disclosure, to save area overhead of the buffer, a compressed input tensor may be stored in the first buffer 311 or the second buffer, and after the compressed input tensor is read by the operational array 313, the operational circuit 3133 may perform decompression processing on the compressed input tensor before processing the input tensor, so as to implement corresponding operations on the input tensor. For example, the first input tensor buffered in the first buffer 311 may be a compressed first input tensor (compressed data), and/or the second input tensor buffered in the second buffer may be a compressed second input tensor. Exemplary description is made in the embodiments of this disclosure by using an example in which the first input tensor buffered in the first buffer 311 is the compressed first input tensor, and the second input tensor buffered in the second buffer is an uncompressed second input tensor.

In some examples, the first input tensor may be compressed in advance to obtain the compressed first input tensor. Moreover, when the SOC is powered on, the compressed first input tensor may be written into a DDR (the second buffer), and then may be written from the DDR into the first buffer 311, so that the compressed first input tensor is buffered in the first buffer 311.

In some other examples, the second input tensor may be compressed in advance to obtain the compressed second input tensor. Moreover, when the SOC is powered on, the compressed second input tensor may be written into a DDR (the second buffer), so that the compressed second input tensor is buffered in the second buffer.

In some embodiments of this disclosure, a case is taken as an example in which the first input tensor buffered in the first buffer 311 is the compressed first input tensor, and the second input tensor buffered in the second buffer is the uncompressed second input tensor. After the first input tensor buffered in the first buffer 311 is written into the third buffer 3132 by the first buffer 311, referring to FIG. 5, the controller 3131 is further configured to read the first input tensor from the third buffer 3132, decompress the first input tensor in response to that the first input tensor is compressed data, to obtain a decompressed first input tensor, and write the decompressed first input tensor into the third buffer 3132. The third buffer 3132 is further configured to buffer the decompressed first input tensor and the second input tensor. The operational circuit 3133 is configured to, in response to the operational control signal, read the decompressed first input tensor and the second input tensor from the third buffer 3132, and perform the first operation based on the decompressed first input tensor and the second input tensor to obtain the first output tensor.

For example, the controller 3131 may read the first input tensor from the third buffer based on the read address corresponding to the second write address. When it is determined that the read first input tensor is compressed data, a decompression module (which may be inside or outside the operational array 313, this is not limited in the embodiments of this disclosure) is called to decompress the first input tensor to obtain the decompressed first input tensor, and write the decompressed first input tensor into the third buffer 3132 based on the second write address.

For example, the implementation manner for the operational circuit 3133 to read the decompressed first input tensor and the second input tensor from the third buffer 3132 in response to the operational control signal, and perform the first operation based on the decompressed first input tensor and the second input tensor to obtain the first output tensor is similar to the implementation manner of reading the first input tensor and the second input tensor from the third buffer in response to the operational control signal, and performing the first operation based on the first input tensor and the second input tensor to obtain the first output tensor, and details are not described in the embodiments of this disclosure.

According to the neural network processor provided in the embodiments of this disclosure, the compressed data corresponding to the first input tensor is buffered in the first buffer, the compressed data is written into the third buffer by using the first buffer, and the compressed data is decompressed by the controller, so that the decompressed first input tensor is buffered in the third buffer, and the first operation is performed based on the decompressed first input tensor. Since the first input tensor buffered in the first buffer is compressed data, the area overhead of the first buffer can be reduced.

In some other embodiments of this disclosure, when the third input tensor is reused by the second neural network layer and the third neural network layer, to save the area overhead of the second buffer, the third input tensor may be compressed in advance to obtain a compressed third input tensor. Moreover, when the SOC is powered on, the compressed third input tensor is written into the second buffer. Moreover, when processing the second neural network layer or the third neural network layer, the operational array 313 may read the compressed third input tensor through the first direct memory access controller 312, and write the compressed third input tensor into the third buffer 3132 in the operational array 313.

Thus, the controller 3131 is further configured to read the third input tensor from the third buffer 3132, decompress the third input tensor in response to that the third input tensor is compressed data, to obtain a decompressed third input tensor, and write the decompressed third input tensor into the third buffer 3132, which is further configured to buffer the decompressed third input tensor. Taking the second neural network layer as an example, the operational circuit 3133 is further configured to read the decompressed third input tensor from the third buffer 3132 in response to an operational control signal corresponding to the second neural network layer, and perform the second operation based on the decompressed third input tensor.

In still some other embodiments of this disclosure, when the first output tensor is reused by the fourth neural network layer, to save the area overhead of the first buffer or the second buffer, the controller 3131 may also first call a compression module (which may be inside or outside the operational array 313, this is not limited in the embodiments of this disclosure) to compress the first output tensor to obtain a compressed first output tensor, and then write the compressed first output tensor into the first buffer 311 or the second buffer.

Thus, the controller 3131 is further configured to read the first output tensor from the third buffer 3132, decompress the first output tensor in response to that the first output tensor is compressed data, to obtain a decompressed first output tensor, and write the decompressed first output tensor into the third buffer 3132, which is further configured to buffer the decompressed first output tensor. The operational circuit 3133 is further configured to read the decompressed first output tensor from the third buffer 3132 in response to an operational control signal corresponding to the fourth neural network layer, and perform the fourth operation based on the decompressed first output tensor.

In some yet other embodiments of this disclosure, when the fourth input tensor is reused by the fifth neural network layer processed by the first processor core 31 and the sixth neural network layer processed by the second processor core 32, to save area overhead of the on-chip memory, the fourth input tensor may be compressed in advance to obtain a compressed fourth input tensor. Moreover, when the SOC is powered on, the compressed fourth input tensor is written into the on-chip memory.

Subsequently, when processing the fifth neural network layer, the first processor core 31 may read the compressed fourth input tensor from the on-chip memory through the second direct memory access controller, and write the compressed fourth input tensor into the second buffer in the first processor core 31. Further, the compressed fourth input tensor is read from the second buffer in the first processor core 31 by the first direct memory access controller 312 in the first processor core 31, and is written into the third buffer 3132 in the first processor core 31.

Meanwhile, when processing the sixth neural network layer, the second processor core 32 may read the compressed fourth input tensor from the on-chip memory by the second direct memory access controller, and write the compressed fourth input tensor into the second buffer in the second processor core 32. Further, the compressed fourth input tensor is read from the second buffer in the second processor core 32 by the first direct memory access controller in the second processor core 32, and is written into the third buffer in the second processor core 32.

Thus, the controller 3131 in the first processor core 31 is further configured to read the fourth input tensor from the third buffer 3132, decompress the fourth input tensor in response to that the fourth input tensor is compressed data, to obtain a decompressed fourth input tensor, and write the decompressed fourth input tensor into the third buffer 3132, which is further configured to buffer the decompressed fourth input tensor. The operational circuit 3133 is further configured to read the decompressed fourth input tensor from the third buffer 3132 in response to an operational control signal corresponding to the fifth neural network layer, and perform the fifth operation based on the decompressed fourth input tensor.

Since the functions of the controller, the third buffer, and the operational circuit in the second processor core are similar to those of the controller, the third buffer, and the operational circuit in the first processor core, details are not described in the embodiments of this disclosure.

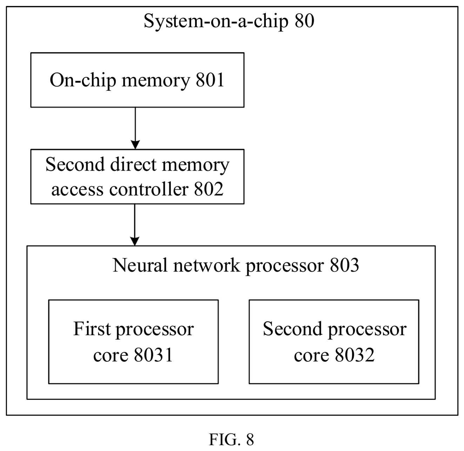

On the basis of the foregoing embodiments, an embodiment of this disclosure provides a system-on-a-chip. FIG. 8 is a schematic diagram of a structure of a system-on-a-chip according to an exemplary embodiment of this disclosure. As shown in FIG. 8, a system-on-a-chip 80 may include an on-chip memory 801, a second direct memory access controller 802, and a neural network processor 803. The neural network processor 803 includes at least one processor core, which includes a first processor core 8031 and a second processor core 8032.

The on-chip memory 801 is configured to buffer the fourth input tensor.

The second direct memory access controller 802 is configured to read the fourth input tensor from the on-chip memory 801, and write the fourth input tensor into the first processor core 8031 and the second processor core 8032.

The first processor core 8031 is configured to perform the fifth operation corresponding to the fifth neural network layer in the neural network model based on the fourth input tensor.

The second processor core 8032 is configured to, in response to that the fourth input tensor is reused by the sixth neural network layer and the fifth neural network layer in the neural network model, perform the sixth operation corresponding to the sixth neural network layer based on the fourth input tensor.

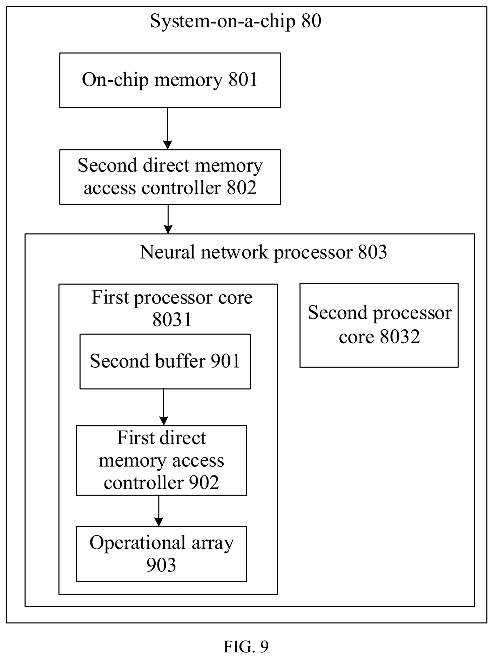

As shown in FIG. 9, on the basis of the embodiments shown in FIG. 8, the first processor core 8031 includes a second buffer 901, a first direct memory access controller 902, and an operational array 903.

The second direct memory access controller 802 is configured to write the fourth input tensor into the second buffer 901.

The second buffer 901 is configured to buffer the fourth input tensor.

The first direct memory access controller 902 is configured to read the fourth input tensor from the second buffer 901, and write the fourth input tensor into the operational array 903.

The operational array 903 is configured to perform the fifth operation based on the fourth input tensor.

Since a structure of the second processor core 8032 is same as that of the first processor core 8031, the structure of the second processor core 8032 is not described in detail in the embodiments of this disclosure.

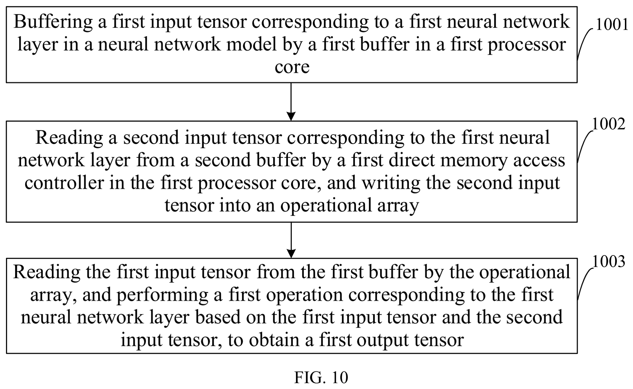

On the basis of the foregoing embodiments, an embodiment of this disclosure provides a data processing method applied to the first processor core 31 in the neural network processor 30 shown in FIG. 3. FIG. 10 is a schematic flowchart of a data processing method according to an exemplary embodiment of this disclosure. The data processing method includes the following steps 1001 to 1003.

Step 1001: Buffering a first input tensor corresponding to a first neural network layer in a neural network model by a first buffer in a first processor core.

Step 1002: Reading a second input tensor corresponding to the first neural network layer from a second buffer by a first direct memory access controller in the first processor core, and writing the second input tensor into an operational array.

Step 1003: Reading the first input tensor from the first buffer by the operational array, and performing a first operation corresponding to the first neural network layer based on the first input tensor and the second input tensor, to obtain a first output tensor.

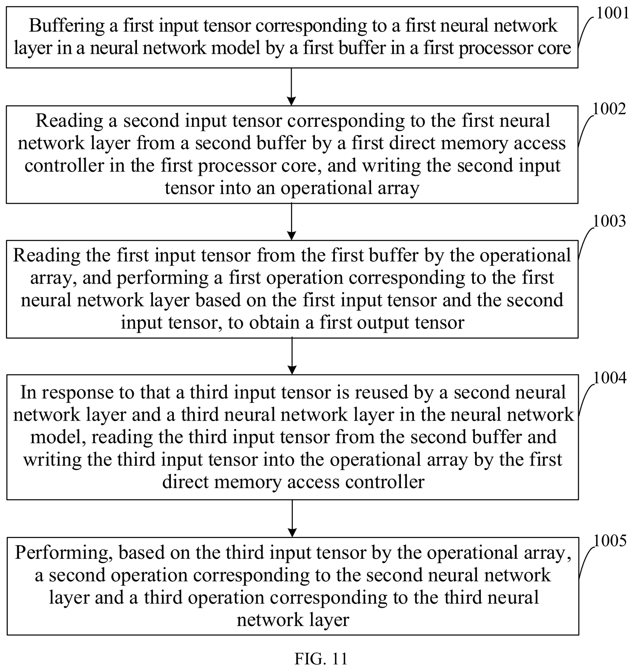

As shown in FIG. 11, on the basis of the embodiment shown in FIG. 10, the data processing method further includes the following steps 1004 and 1005.

Step 1004: In response to that a third input tensor is reused by a second neural network layer and a third neural network layer in the neural network model, reading the third input tensor from the second buffer and writing the third input tensor into the operational array by the first direct memory access controller.

Step 1005: Performing, based on the third input tensor, by the operational array, a second operation corresponding to the second neural network layer and a third operation corresponding to the third neural network layer.

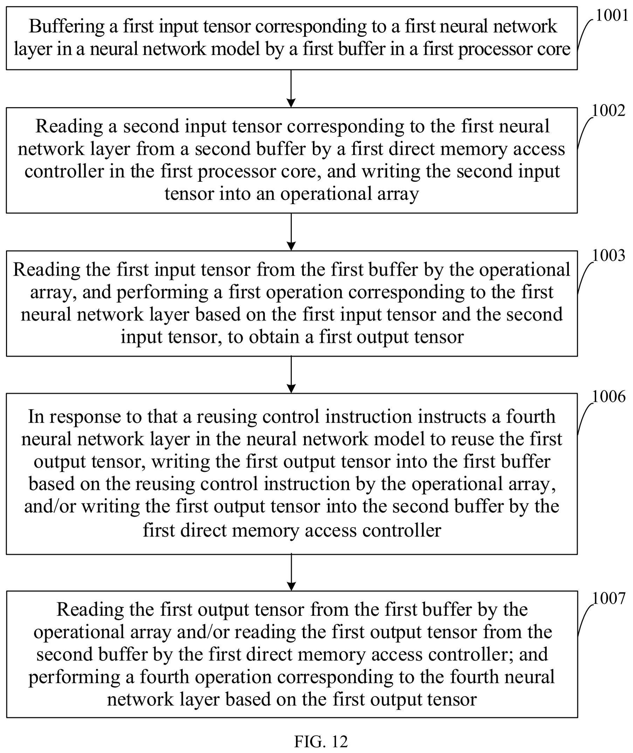

As shown in FIG. 12, on the basis of the embodiment shown in FIG. 10, the data processing method further includes the following steps 1006 and 1007.

Step 1006: In response to that a reusing control instruction instructs a fourth neural network layer in the neural network model to reuse the first output tensor, writing the first output tensor into the first buffer based on the reusing control instruction by the operational array, and/or writing the first output tensor into the second buffer by the first direct memory access controller.

Step 1007: Reading the first output tensor from the first buffer by the operational array and/or reading the first output tensor from the second buffer by the first direct memory access controller; and performing a fourth operation corresponding to the fourth neural network layer based on the first output tensor.

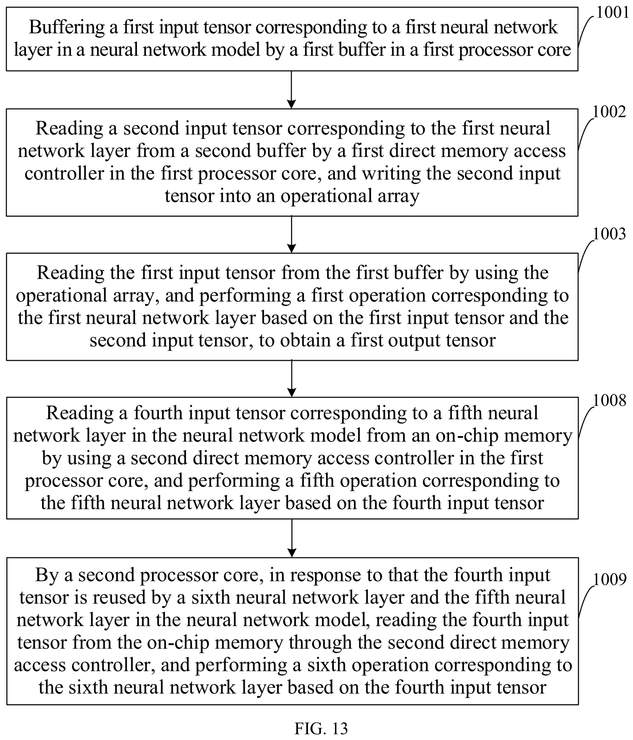

As shown in FIG. 13, on the basis of the embodiment shown in FIG. 10, the data processing method further includes the following steps 1008 and 1009.

Step 1008: Reading a fourth input tensor corresponding to a fifth neural network layer in the neural network model from an on-chip memory by a second direct memory access controller, and performing a fifth operation corresponding to the fifth neural network layer based on the fourth input tensor.

Step 1009: By the second processor core, in response to that the fourth input tensor is reused by a sixth neural network layer and the fifth neural network layer in the neural network model, reading the fourth input tensor from the on-chip memory through the second direct memory access controller, and performing a sixth operation corresponding to the sixth neural network layer based on the fourth input tensor.

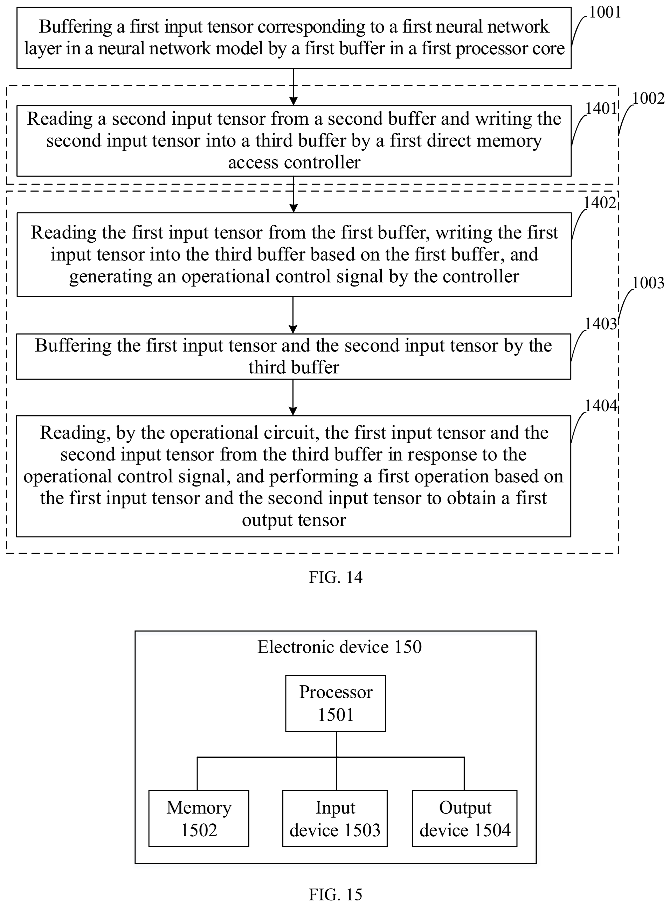

As shown in FIG. 14, on the basis of the embodiment shown in FIG. 10, step 1002 may include the following step 1401, and step 1003 may include the following steps 1402 to 1404.

Step 1401: Reading the second input tensor from the second buffer and writing the second input tensor into the third buffer by the first direct memory access controller.

Step 1402: Reading the first input tensor from the first buffer, writing the first input tensor into the third buffer, and generating an operational control signal by the controller.

Step 1403: Buffering the first input tensor and the second input tensor by the third buffer.

Step 1404: Reading, by the operational circuit, the first input tensor and the second input tensor from the third buffer in response to the operational control signal, and performing the first operation based on the first input tensor and the second input tensor to obtain the first output tensor.

In some embodiments of this disclosure, the data processing method further includes generating a selection control signal by the controller. Writing the first input tensor into the third buffer may include: in response to the selection control signal, selecting, by the selector, to output the first input tensor in the first buffer to the third buffer. Writing the second input tensor into the third buffer by the first direct memory access controller may include: in response to the selection control signal, selecting, by the selector, to output the second input tensor in the first direct memory access controller to the third buffer.

In some embodiments of this disclosure, after the first input tensor is written into the third buffer by the first buffer, the data processing method further includes: reading the first input tensor from the third buffer by the controller; decompressing the first input tensor in response to that the first input tensor is compressed data, to obtain a decompressed first input tensor; and writing the decompressed first input tensor into the third buffer. Correspondingly, step 1404 specifically includes: reading the decompressed first input tensor and the second input tensor from the third buffer in response to the operational control signal by the operational circuit; and performing the first operation based on the decompressed first input tensor and the second input tensor to obtain the first output tensor.

### Exemplary electronic device

FIG. 15 is a schematic diagram of a structure of an electronic device according to an exemplary embodiment of this disclosure. As shown in FIG. 15, an electronic device 150 includes one or more processors 1501 and a memory 1502.

The processor 1501 may be a central processing unit (CPU) or another form of processing unit having a data processing capability and/or an instruction execution capability, and may control other components in the electronic device 150 to implement desired functions.

The memory 1502 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1501 may execute the program instruction to implement the data processing method according to various embodiments of this disclosure that are described above and/or other desired functions.

In an example, the electronic device 150 may further include an input device 1503 and an output device 1504. These components are connected to each other through a bus system and/or another form of connection mechanism (not shown).

Certainly, for simplicity, FIG. 15 shows only some of components in the electronic device 150 that are related to this disclosure, and components such as a bus and an input/output interface are omitted. In addition, according to specific application situations, the electronic device 150 may further include any other appropriate components.

### Exemplary computer program product and computer readable storage medium

In addition to the foregoing method and device, the embodiments of this disclosure may also relate to a computer program product, which includes computer program instructions. When the computer program instructions are run by a processor, the processor is enabled to perform the steps, of the data processing method according to the embodiments of this disclosure, that are described in this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the data processing method according to the embodiments of this disclosure, that are described in this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a nonexhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A neural network processor (30), **characterized in that** the processor comprises a first processor core (31), wherein the first processor core (31) comprises:
a first buffer (311), configured to buffer a first input tensor corresponding to a first neural network layer in the neural network model;
a first direct memory access controller (312), configured to read a second input tensor corresponding to the first neural network layer from a second buffer (901), and write the second input tensor into an operational array (313); and
the operational array (313), configured to read the first input tensor from the first buffer (311), and perform a first operation corresponding to the first neural network layer based on the first input tensor and the second input tensor, to obtain a first output tensor.

2. The neural network processor (30) according to claim 1, wherein
the first direct memory access controller (312) is further configured to, in response to that a third input tensor is reused by a second neural network layer and a third neural network layer in the neural network model, read the third input tensor from the second buffer (901) and write the third input tensor into the operational array (313); and
the operational array (313) is further configured to perform, based on the third input tensor, a second operation corresponding to the second neural network layer and a third operation corresponding to the third neural network layer.

3. The neural network processor (30) according to claim 1, wherein
the operational array (313) is further configured to, in response to that a reusing control instruction instructs a fourth neural network layer in the neural network model to reuse the first output tensor, write the first output tensor into the first buffer (311) based on the reusing control instruction, and/or write the first output tensor into the second buffer (901) through the first direct memory access controller (312); and
the operational array (313) is further configured to read the first output tensor from the first buffer (311) and/or read the first output tensor from the second buffer (901) through the first direct memory access controller (312); and to perform a fourth operation corresponding to the fourth neural network layer based on the first output tensor.

4. The neural network processor (30) according to claim 1, wherein the neural network processor (30) further comprises a second processor core (32);
the first processor core (31) is configured to read a fourth input tensor corresponding to a fifth neural network layer in the neural network model from an on-chip memory through a second direct memory access controller, and perform a fifth operation corresponding to the fifth neural network layer based on the fourth input tensor; and
the second processor core (32) is configured to, in response to that the fourth input tensor is reused by a sixth neural network layer and the fifth neural network layer in the neural network model, read the fourth input tensor from the on-chip memory through the second direct memory access controller, and perform a sixth operation corresponding to the sixth neural network layer based on the fourth input tensor.

5. The neural network processor (30) according to any one of claims 1 to 4, wherein the operational array (313) comprises a controller (3131), a third buffer (3132), and an operational circuit (3133);
the controller (3131) is configured to read the first input tensor from the first buffer (311), write the first input tensor into the third buffer (3132), and generate an operational control signal;
the first direct memory access controller (312) is configured to read the second input tensor from the second buffer (901), and write the second input tensor into the third buffer (3132);
the third buffer (3132) is configured to buffer the first input tensor and the second input tensor; and
the operational circuit (3133) is configured to, in response to the operational control signal, read the first input tensor and the second input tensor from the third buffer (3132), and perform the first operation based on the first input tensor and the second input tensor to obtain the first output tensor.

6. The neural network processor (30) according to claim 5, wherein the operational array (313) further comprises a selector (3135);
the controller (3131) is further configured to generate a selection control signal; and
the selector (3135) is configured to, in response to the selection control signal, select to output the first input tensor in the first buffer (311) to the third buffer (3132) or output the second input tensor in the first direct memory access controller (312) to the third buffer (3132).

7. The neural network processor (30) according to claim 5, wherein
the controller (3131) is further configured to read the first input tensor from the third buffer (3132), decompress the first input tensor in response to that the first input tensor is compressed data, to obtain a decompressed first input tensor, and write the decompressed first input tensor into the third buffer (3132);
the third buffer (3132) is further configured to buffer the decompressed first input tensor and the second input tensor; and
the operational circuit (3133) is configured to read the decompressed first input tensor and the second input tensor from the third buffer (3132) in response to the operational control signal, and perform the first operation based on the decompressed first input tensor and the second input tensor to obtain the first output tensor.

8. The neural network processor (30) according to any one of claims 1 to 4, wherein the first processor core (31) comprises the second buffer (901).

9. A system-on-a-chip (80), **characterized in that** the system-on-a-chip (80) comprises an on-chip memory (801), a second direct memory access controller (802), and a neural network processor (803), wherein the neural network processor (803) comprises at least one processor core, and the at least one processor core comprises a first processor core (8031) and a second processor core (8032);
the on-chip memory (801) is configured to buffer a fourth input tensor;
the second direct memory access controller (802) is configured to read the fourth input tensor from the on-chip memory (801), and write the fourth input tensor into the first processor core (8031) and the second processor core (8032);
the first processor core (8031) is configured to perform a fifth operation corresponding to a fifth neural network layer in the neural network model based on the fourth input tensor; and
the second processor core (8032) is configured, in response to that the fourth input tensor is reused by a sixth neural network layer and the fifth neural network layer in the neural network model, to perform a sixth operation corresponding to the sixth neural network layer based on the fourth input tensor.

10. The system-on-a-chip (80) according to claim 9, wherein the first processor core (31) comprises a second buffer (901), a first direct memory access controller (902), and an operational array (903);
the second direct memory access controller (802) is configured to write the fourth input tensor into the second buffer (901);
the second buffer (901) is configured to buffer the fourth input tensor;
the first direct memory access controller (902) is configured to read the fourth input tensor from the second buffer (901), and write the fourth input tensor into the operational array (903); and
the operational array (903) is configured to perform the fifth operation based on the fourth input tensor.

11. A data processing method, applied to a first processor core in a neural network processor, **characterized in that** the method comprises:
buffering (1001) a first input tensor corresponding to a first neural network layer in a neural network model by a first buffer in the first processor core;
reading (1002) a second input tensor corresponding to the first neural network layer from a second buffer by a first direct memory access controller in the first processor core, and writing the second input tensor into an operational array in the first processor core; and
reading (1003) the first input tensor from the first buffer by the operational array, and performing a first operation corresponding to the first neural network layer based on the first input tensor and the second input tensor, to obtain a first output tensor.

12. The data processing method according to claim 11, further comprising:
in response to that a third input tensor is reused by a second neural network layer and a third neural network layer in the neural network model, reading (1004) the third input tensor from the second buffer and writing the third input tensor into the operational array by the first direct memory access controller;
performing (1005), based on the third input tensor, by the operational array, a second operation corresponding to the second neural network layer and a third operation corresponding to the third neural network layer.

13. The data processing method according to claim 11, further comprising:
in response to that a reusing control instruction instructs a fourth neural network layer in the neural network model to reuse the first output tensor, writing (1006) the first output tensor into the first buffer based on the reusing control signalreusing control instruction by the operational array, and/or writing the first output tensor into the second buffer by the first direct memory access controller;
reading (1007) the first output tensor from the first buffer by the operational array and/or reading the first output tensor from the second buffer by the first direct memory access controller; and performing a fourth operation corresponding to the fourth neural network layer based on the first output tensor.

14. An electronic device, **characterized in that** the electronic device comprises:
a processor (1501); and
a memory (1502), configured to store processor-executable instructions, wherein
the processor (1501) is configured to read the executable instructions from the memory (1502), and execute the instructions to implement the data processing method according to claim 11.

15. A computer readable storage medium, wherein the storage medium stores a computer program that, when executed by a processor, causes the processor to implement the data processing method according to claim 11.
